Europäisches Patentamt

European Patent Office

Office européen des brevets

(19)

(11) Veröffentlichungsnummer: **0 172 925**
**A1**

## (12) EUROPÄISCHE PATENTANMELDUNG

(21) Anmeldenummer: 84109965.8

(22) Anmeldetag: 22.08.84

(51) Int. Cl.⁴: **B 29 C 45/24**

(43) Veröffentlichungstag der Anmeldung: 05.03.86
**Patentblatt 86/10**

(71) Anmelder: **Odenwälder Kunststoffwerke GmbH,
Industriegelände, D-6967 Buchen/Odenwald (DE)**

(72) Erfinder: **Dörsam, Karl-Heinz, Gänsäckerstrasse 14,
D-6967 Buchen-Bödigheim (DE)**

(84) Benannte Vertragsstaaten: **AT BE CH DE FR GB IT LI NL
SE**

(74) Vertreter: **Hach, Hans Karl, Dr., Tarunstrasse 23,
D-6950 Mosbach-Waldstadt (DE)**

(54) Schmutzfilter für thermoplastische Medien.

(57) Ein Schmutzfilter für zäh fließfähige, thermoplastische Medien besteht aus einem in einem Filterraum (13) angeordneten Sperrkörper (15). Der Sperrkörper definiert im Filterraum einen Sperrspalt (34) für das fließende Medium. Durch Verschieben des Sperrkörpers kann der Sperrspalt zu einem Reinigungsspalt (40) erweitert werden.

EP 0 172 925 A1

ACTORUM AG

Schmutzfilter für thermoplastische Medien

Die Erfindung betrifft ein Schmutzfilter für zäh fließfähige, thermoplastische Medien mit einem in einem öffenbaren Gehäuse ausgesparten Filterraum, in dem ein loser Sperrkörper formschlüssig in Filterstellung sitzt;
mit einer im Gehäuse ausgesparten Zuleitung, die mit kreisrundem Querschnitt koaxial zu einer Flußachse in den Filterraum mündet;
mit einer im Gehäuse ausgesparten Ableitung, die mit kreisrundem Querschnitt koaxial zur Flußachse auf der der Mündung der Zuleitung gegenüberliegenden Seite vom Filterraum ausgeht; wobei der Filterraum und der Sperrkörper rotationssymmetrisch zur Flußachse und glatt ausgestaltet sind und wobei der Innendurchmesser des Filterraums, gemessen senkrecht zur Flußachse, überall größer ist als der entsprechend auf gleicher axialer Höhe gemessene Außendurchmesser des in Filterstellung befindlichen Sperrkörpers und die Differenz dieser beiden Durchmesser in Flußrichtung zunächst abnimmt bis auf einen Sperrquerschnitt eines ringförmigen Sperrspaltes und hinter diesem wieder zunimmt.

Beim Spritzgießen mit thermoplastischem Kunststoff wird das durch Erhitzen zäh fließende Medium einer Spritzdüse zugeführt und von dieser in eine angesetzte Spritzform getrieben. Verunreinigungen des Mediums, zum Beispiel durch Metallsplitter, werden am Sperrspalt des Schmutzfilters zurückgehalten. Wenn sich sehr viel Schmutz vor dem Sperrspalt gesammelt hat, behindert der Schmutz den weiteren Durchfluß des Mediums und muß entfernt werden.

Bei einem aus dem DE-GM 84 02 924 bekannten Schmutzfilter der eingangs genannten Art wird zu diesem Zweck das Filtergehäuse geöffnet, der Sperrkörper herausgenommen und der Filterraum gereinigt.

Aufgabe der Erfindung ist es, die Notwendigkeit des Öffnens des Gehäuses zu Reinigungszwecken zu vermeiden.

Die Lösung dieser Aufgabe ist im Anspruch 1 gekennzeichnet.

Danach genügt es, zum Reinigen den Sperrkörper in seine Reinigungsstellung zu verschieben, so daß der angesammelte Schmutz durch das fließende Medium mitgerissen wird. Aus der Spritzdüse tritt dann eine Portion stark verschmutztes Medium. Diese Portion wird verworfen. Danach wird der Sperrkörper wieder in seine Filterstellung versetzt und der Spritzbetrieb kann fortgesetzt werden.

Während des normalen Filterbetriebes übt das durchströmende Medium Druck in Flußrichtung auf den Sperrkörper aus. Deshalb empfiehlt es sich, den Sperrkörper gegen die Flußrichtung in seine Reinigungsstellung verstellbar auszugestalten.

Für eine einwandfreie Funktion ist es besonders wichtig, daß der Sperrspalt exakt dimensioniert ist. Dazu muß der Sperrkörper in Filterstellung exakt in einer vorbestimmten Stellung stehen. Dies wird erzielt durch eine Ausgestaltung der Erfindung nach Anspruch 3. Der Sperrkörper wird danach durch den Druck des fließenden Mediums in seine durch die Anschlagfläche und die Anschlaggegenfläche definierte Filterstellung getrieben und findet an diesen Flächen, die entsprechend stabil ausgebildet sein können, auch genug Halt gegen den unter Umständen sehr hohen Druck des anströmenden Mediums.

Die Führung des Sperrkörpers kann sehr einfach ausgestaltet sein, einseitig oder beidseitig, wie dies Gegenstand der Ansprüche 4 bis 6 ist.

Die Einrichtung zur Verstellung des Sperrkörpers in Reinigungsstellung und zurück in Filterstellung soll möglichst einfach ausgestaltet und zu handhaben sein. Eine entsprechende Ausgestaltung ist Gegenstand des Anspruchs 7. Durch Einschrauben der Madenschraube drückt diese auf die Konusfläche und schiebt den Sperrkörper gegen die Flußrichtung in Reinigungsstellung. Wenn die Madenschraube wieder zurückgedreht wird, kann der Sperrkörper dem Druck des anstehenden Mediums folgend wieder in seine Sperrstellung ausweichen.

Es ist wünschenswert bei einem Schmutzfilter den unvermeidlichen Strömungswiderstand im Bereich des Sperrkörpers möglichst klein zu halten und Verstellbarkeit der Filterwirkung durch Austausch des Sperrkörpers gegen einen anders bemessenen zu ermöglichen. Das wird auf besonders einfache Weise ermöglicht durch eine Ausgestaltung nach Anspruch 9.

Bei starkem Schmutzanfall empfiehlt es sich, zunächst die großen Schmutzteilchen auszusondern, dann kleinere und so fort, um den Schmutzanfall an einer Stelle im Interesse einer langen Aufrechterhaltung des Betriebes kleinzuhalten. Dazu kann man mehrere entsprechend dimensionierte Schmutzfilter hintereinanderschalten. Diesen Aufwand vermeidet eine Ausgestaltung der Erfindung nach Anspruch 10, bei der eine mehrfach gestaffelte Filterung in einem einzigen Sperrkörper möglich ist und auch eine einfache Reinigungsmöglichkeit geboten ist.

Die Erfindung wird nun anhand der beigefügten Zeichnung näher erläutert.

In der Zeichnung zeigt:

Figur 1          ein Schmutzfilter nach der Erfindung mit dem
                 Sperrkörper in Filterstellung, zur Hälfte geschnitten, zur Hälfte in Ansicht,

Figur 2          den Schnitt II aus Figur 1,

Figur 3          den Schnitt III aus Figur 1,

Figur 4          den Schnitt IV aus Figur 1,

Figur 5          den Sperrkörper aus Figur 1 allein in der
                 Ansicht gemäß Pfeil V,

Figur 6          den Schmutzfilter aus Figur 1 jedoch mit dem
                 Sperrkörper in Reinigungsstellung,

Figur 7          im Teilschnitt ein anderes Ausführungsbeispiel eines Schmutzfilters, das mit drei
                 Sperrspalten ausgestattet ist, und

Figur 8          im Teilschnitt ein weiteres Ausführungsbeispiel eines Schmutzfilters.

In der Zeichnung ist mit 1 das Filtergehäuse bezeichnet, das
aus zwei Teilen 2 und 3 besteht. Die beiden Teile 2 und 3 sind
entlang der Verschraubung 4 lösbar miteinander verbunden. Zur
Erleichterung der Verschraubung sind am Teil 2 Sechskantschlüsselflächen 5 und am Teil 3 Sechskantschlüsselflächen 6 vorgesehen. Das vordere Ende des Teils 2 ist als Spritzdüse 7 ausgebildet. Am rückwärtigen Ende des Teils 3 ist eine Anschlußmuffe 8 mit Außengewinde 9 und einer zugehörigen Anschlagfläche 10 zum Anschrauben des Gehäuses an einen vorgeordneten
Zulieferer für das unter Druck stehende fließfähige, thermoplastische Medium, zum Beispiel Kunststoff,

Im Gehäuse 1 ist eine Zuleitung 11 und eine Ableitung 12 jeweils mit kreisrundem Querschnitt koaxial zur Flußachse 14
ausgespart. Die Zuleitung 11 mündet in einen Filterraum 13,
von dem an der gegenüberliegenden Seite die Ableitung 12 ausgeht. Die Flußrichtung für das thermoplastische Medium entspricht dem Pfeil V.

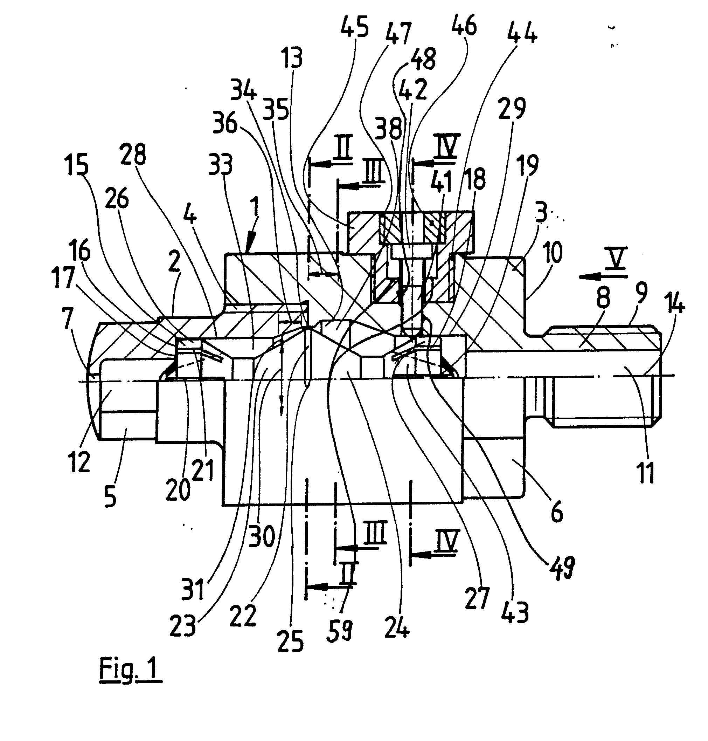

Im Filterraum 13 ist ein loser Sperrkörper 15 eingesetzt, der
in Figur 1 in Filterstellung, die er bei Filterbetrieb einnimmt, gezeichnet ist. In dieser Filterstellung liegt der

Sperrkörper 15 mit einer zur Flußachse 14 koaxialen, ringförmigen, in Flußrichtung gerichteten Anschlagfläche 16 an einer Anschlaggegenfläche 17 des Gehäuses 1 an, die ebenfalls ringförmig und koaxial zur Flußachse 14 ausgebildet ist und der Flußrichtung entgegengerichtet ist.

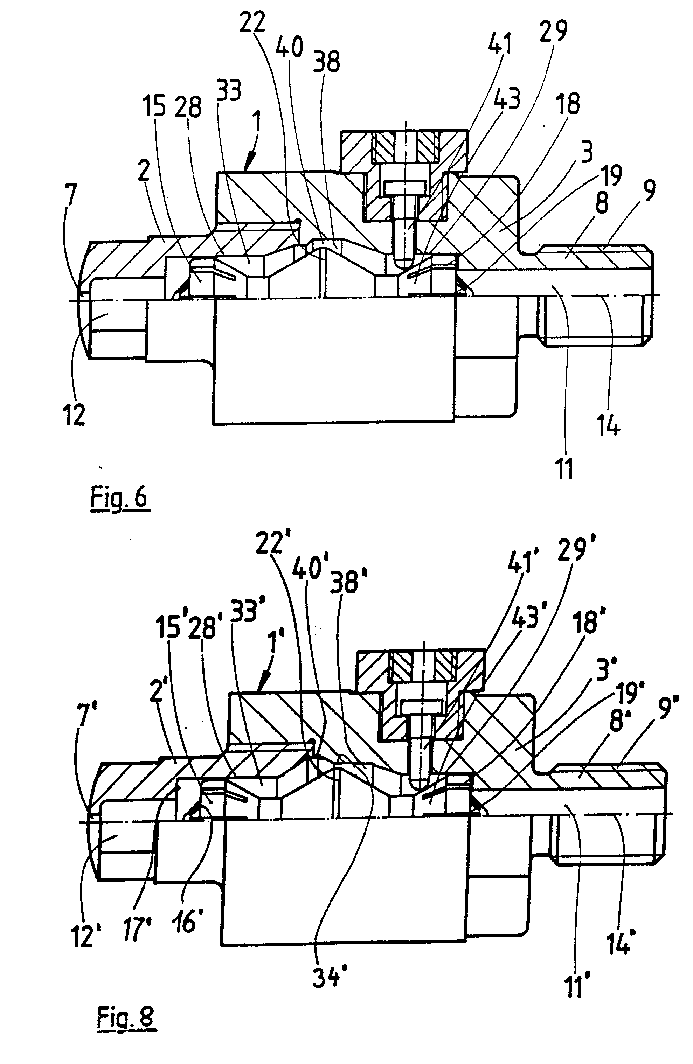

Der Sperrkörper 15 ist, abgesehen von Schlitzen 18 bis 21, rotationssymmetrisch zur Flußachse 14 ausgestaltet und koaxial zur Flußachse und zu dem ebenfalls rotationssymmetrisch ausgebildeten Filterraum 13 angeordnet. Der mittlere Bereich des Sperrkörpers 15 hat die Grundform zweier mit ihrer Basis 22 aufeinanderstehender Konusse 23, 24. Der Sperrkörper weist auf seinem Umfang entlang der aneinanderstoßenden Basisflächen eine Abrundung 25 auf. Die beiden Enden des Sperrkörpers sind als Führungskörper 26, 27 ausgebildet. Die beiden Führungskörper passen formschlüssig in Führungsausnehmungen 28,29 des Gehäuses und sind in diesen Führungsausnehmungen entlang der Flußachse 14 verschieblich geführt. Der Sperrkörper kann aus der in Figur 1 gezeichneten Filterstellung gegen die Flußrichtung in die in Figur 6 gezeichnete Reinigungsstellung verschoben werden. In Filterstellung, in Reinigungsstellung und in allen Zwischenstellungen behält der Sperrkörper seine koaxiale Lage zur Flußachse 14. bei.

Beide Führungskörper 26, 27 weisen auf ihrem Umfang verteilt die bereits erwähnten Schlitze 18 bis 21 auf, die sich entlang der Flußachse erstrecken und den Durchfluß des Mediums gestatten.

Der Außendurchmesser des Sperrkörpers gemäß Doppelpfeil 30 ist, ausgenommen im Bereich der Schlitze 18 bis 21, überall kleiner als der auf gleicher axialer Höhe gemessene Innendurchmesser gemäß Doppelpfeil 31 des Filterraums 13. Die Folge ist, daß überall im Filterraum ein ringförmiger Zwischenraum 33 ausgespart bleibt, durch den das Filtermedium strömen kann. Das Filtermedium tritt also in die Zuleitung ein, von da durch die Schlitze 18, 19 in den Zwischenraum 33 und von da durch die Schlitze 20, 21 in die Ableitung und von da durch die Düse 7 in eine angeschlossene, nicht dargestellte Gießform.

Im Bereich der Abrundung 25 ist der Zwischenraum 33 am engsten, so daß dort ein ringförmiger Sperrspalt 34 entsteht, der für den Durchfluß des Mediums die Stelle mit engster Durchlaßbreite bildet. Die Folge ist, daß Schmutzteilchen vor diesem Sperrspalt 34 zurückgehalten werden. Die Durchmesserdifferenz des Innendurchmessers des Filterraums und des Außendurchmessers des Sperrkörpers nimmt in Flußrichtung im Bereich 35 vor dem Sperrspalt 34 zunächst ab und im Bereich 36 hinter dem Sperrspalt wieder zu. Die Abnahme der Durchmesserdifferenz im Bereich 35 ist wesentlich stärker als die Zunahme im Bereich 36. Auf diese Weise entsteht in Flußrichtung vor dem Sperrspalt eine Schmutztasche 38, in der sich der Schmutz sammeln kann. Diese Schmutztasche ist möglichst groß ausgebildet, sie erstreckt sich fast bis an den Führungskörper 27.

Der Innendurchmessers des Filterraums ist in Flußrichtung vor dem Sperrspalt 34 größer als auf der Höhe des Sperrspaltes. Wenn der Sperrkörper in seine in Figur 6 gezeichnete Reinigungsstellung gerät, dann gerät die Abrundung 25, also der breiteste Bereich des Sperrkörpers, dieser weiteren Stelle des Filterraums gegenüber und es entsteht statt des engen Sperrspaltes ein breiter Reinigungsspalt 40.

Die Durchlaßbreite des Reinigungsspaltes ist zweckmäßig etwas größer als die Durchlaßbreite der Schlitze 18 und 19.

Mit 45 ist ein Aufnahmekörper bezeichnet, der mit dem Gewinde 44 in das Gehäuse eingeschraubt ist. In diesem Aufnahmekörper steckt koaxial eine als Verstellschraube dienende Madenschraube 41. Die Madenschraube ist durch das Gewinde 48 mit dem Aufnahmekörper 45 verschraubt und steckt mit ihrem freien Ende in dem Loch 49 des Gehäuses 1. Die Madenschraube 41 weist eine Imbusschlüsselaufnahme 42 auf. In den Aufnahmekörper ist mittels des Gewindes 47 eine Verschlußschraube 46 eingeschraubt, die einen zentralen Durchbruch aufweist, durch den die Imbusschlüsselaufnahme 42 von außen zugänglich ist. Die Madenschraube 41 ist radial auf eine Konusfläche 43 des Sperrkörpers gerichtet. Diese Konusfläche 43 ist ringförmig und koaxial zur Flußachse 14 und verengt sich in Flußrichtung. Die Madenschraube 41 ist in der in Figur 1 gezeichneten Filterstellung des Filterkörpers auf das weite Ende der Konusfläche gerichtet. In dieser Stellung ist die Madenschraube zurückgedreht und liegt mit ihrem Kopf stramm an der Verschlußschraube 46 an, so daß dort eine Dichtung entsteht. Wird die Madenschraube 41 angezogen, dann drängt sie den Sperrkörper in seine Reinigungsstellung und gleitet dabei auf der Konusfläche 43 zum engeren Ende der Konusfläche. Der Sperrkörper hat seine Reinigungsstellung erreicht, wenn der Kopf der Madenschraube auf der unteren Schulter 59 des Aufnahmekörpers 45 anschlägt. In dieser Reinigungsstellung der Madenschraube besteht Abdichtung zwischen der Schulter 59 und dem Kopf der Madenschraube 41. Die Abdichtungen des Kopfes der Madenschraube in Filterstellung und in Reinigungsstellung der Madenschraube können begünstigt werden durch je eine ringförmige Schneidkante auf beiden Seiten des Kopfes der Madenschraube, der sich in die Verschlußschraube beziehungsweise in die Schulter 59 eindrückt. Wird die Madenschraube aus ihrer Reinigungsstellung wieder zurückgedreht in die in Figur 1 dargestellte Filterstellung, dann weicht der Sperrkörper, dem Druck des anstehenden Mediums folgend, wieder in seine in Figur 1 gezeichnete Filterstellung zurück.

Bei Betrieb wirken die Schlitze 18, 19 als Vorfilter und der Sperrspalt 34 als Hauptfilter. Vor dem Sperrspalt 34 sammelt sich in der Schmutztasche 38 Schmutz, der zurückgehalten ist und schließlich die Tasche füllt. Wenn das geschehen ist, dann ist die Durchflußbehinderung durch diesen in der Tasche gesammelten Schmutz so groß, daß der Betrieb unterbrochen werden muß. Die Madenschraube 41 wird jetzt angezogen, so daß der Sperrspalt 34 sich zu dem Reinigungsspalt 40 öffnet und das Medium den in der Schmutztasche gesammelten Schmutz mitnehmen kann. Die Schlitze 20, 21 und die Düse 7 sind weit genug, so daß der Schmutz dort ungehindert passieren kann. Die mit dem Schmutz angereicherte Portion des Mediums wird verworfen. Anschließend wird die Madenschraube 41 wieder zurückgedreht und der Sperrkörper weicht wieder in seine Filterstellung und der Spritzbetrieb kann fortgesetzt werden.

Vor den Schlitzen 18, 19 sammeln sich nur verhältnismäßig große Schmutzteilchen, die, wenn überhaupt, äußerst selten erwartet werden, so daß dort auch nach langer Betriebszeit keine Störungen durch angesammelten Schmutz zu erwarten ist. Wenn doch einmal eine solche Störung auftritt, dann muß der Betrieb unterbrochen werden und das Filtergehäuse in geöffnetem Zustand gereinigt werden. Wesentlich ist, daß nach der Erfindung der normalerweise anfallende Schmutz in der Schmutztasche gesammelt wird und durch kurzzeitige Betätigung der Madenschraube ausgeblasen werden kann.

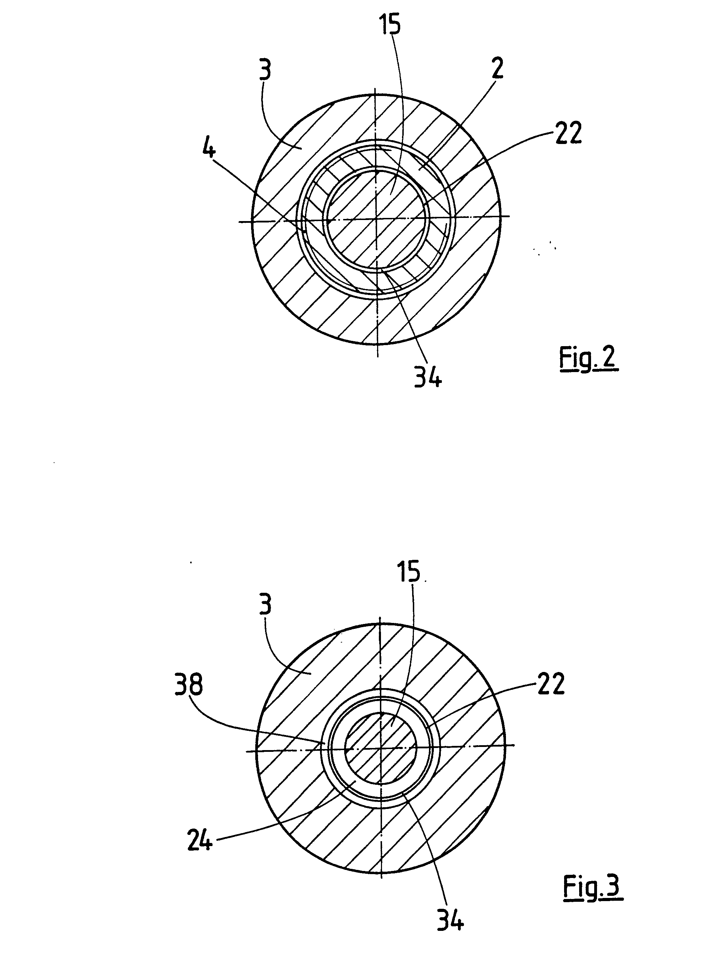

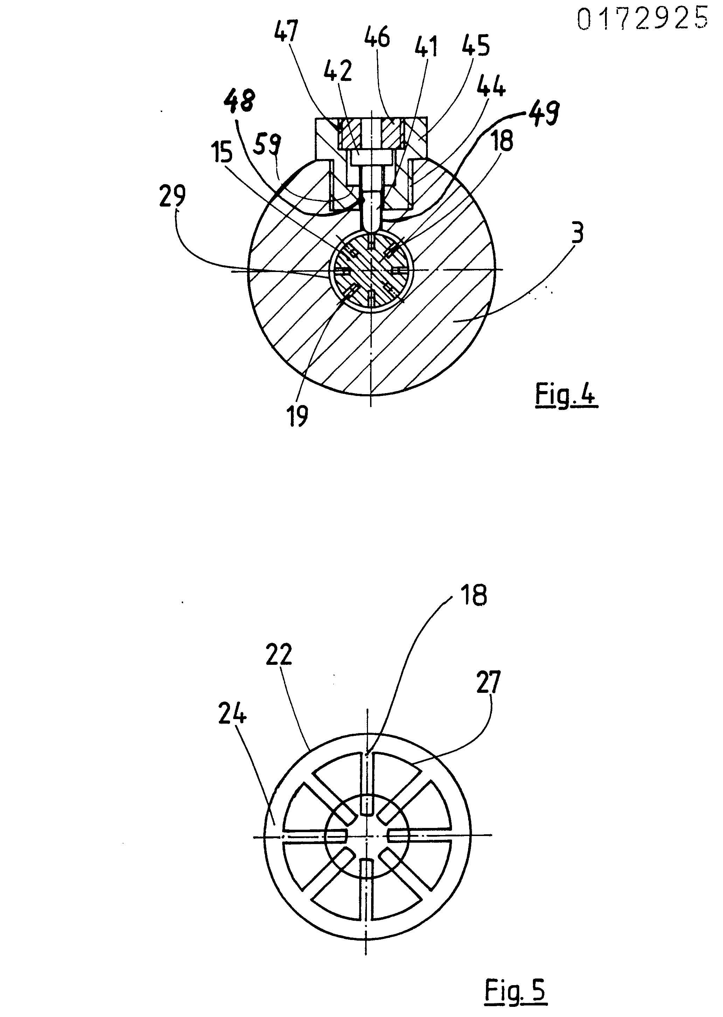

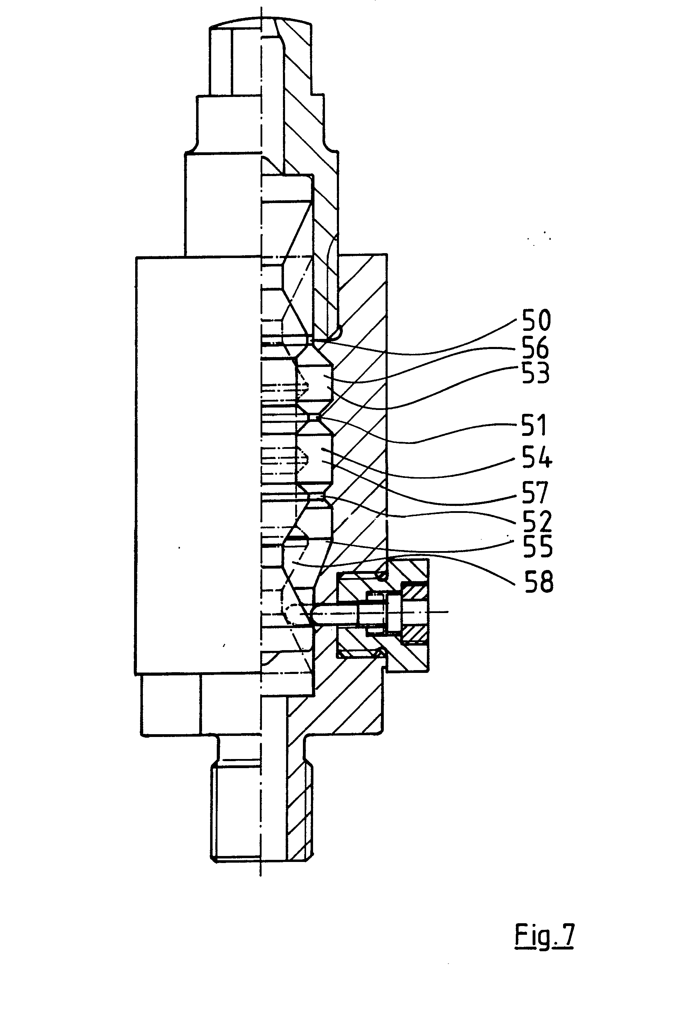

Das in Figur 7 dargestellte Ausführungsbeispiel unterscheidet sich von dem in Figur 1 bis 6 dargestellten nur durch die Ausgestaltung des Filterraums und des Sperrkörpers, so daß drei hintereinandergelegene Sperrspalte 50 bis 52 entstehen. Der Sperrspalt 50 hat eine größere Durchlaßbreite als der Sperrspalt 51 und dieser wiederum eine größere Durchlaßbreite als der Sperrspalt 52. Den drei Sperrspalten sind Reinigungsspalte 53, 54, 55 und Schmutztaschen 56, 57, 58 zugeordnet. Die Sperrspalte erweitern sich zu dem jeweils zugeordneten Reinigungsspalt wenn der Sperrkörper in seine nur strichpunktiert angedeutete Reinigungsstellung verstellt wird. Die Reinigungsspalte 53, 54, 55 haben sämtlichst eine größere Durchlaßbreite als der Sperrspalt 52, so daß der Schmutz aus allen drei Schmutztaschen durch sämtliche Reinigungsspalte ungehindert abströmen kann, wenn der Sperrkörper in seiner Reinigungsstellung steht.

Das in Figur 8 dargestellte Ausführungsbeispiel unterscheidet sich von dem in Figur 1 bis 6 dargestellten Ausführungsbeispiel nur durch die Ausgestaltung des Filterraums 33'. Figur 8 zeigt den Schmutzfilter in Filterstellung. In dieser Filterstellung ist der Sperrkörper 15' durch die eingedrehte Madenschraube 41' gegen die Flußrichtung nach hinten verschoben. In dieser Stellung besteht nur ein schmaler Sperrspalt 34' im Zwischenraum 33', durch den Schmutzteilchen zurückgehalten werden, die sich in der Schmutztasche 38' sammeln. Zu Reinigungszwecken wird die Madenschraube 41' zurückrückgedreht. Der Sperrkörper 15' wird dann durch das Filtermedium in Flußrichtung nach vorn getrieben, in seine Reinigungsstellung, in der er mit seiner Anschlagfläche 16' an der Anschlaggegenfläche 17' anschlägt. In dieser in Figur 8 nicht gezeichneten Reinigungsstellung hat sich der Sperrspalt 34' auf einen breiteren Reinigungsspalt 40' erweitert. Im übrigen ist das Ausführungsbeispiel nach Figur 8 genauso ausgebildet wie das Ausführungsbeispiel nach Figur 1 bis 6. Einander entsprechende Teile sind in Figur 8 mit der gleichen Bezugsziffer wie in Figur 1 bis 6, bezeichnet zum Unterschied jedoch mit nachgesetztem Strich.

In Abänderung der dargestellten Ausführungsbeispiele können den Schlitzen 18 bis 21 entsprechende Schlitze auch in denjenigen Gehäuseteilen vorgesehen sein, die die den Führungsausnehmungen 28, 29 entsprechenden Führungsausnehmungen umgeben. Statt der Schlitze können auch Kanäle vorgesehen sein. Unter Umständen genügt ein einziger Führungskörper am einen Ende des Sperrkörpers.

Statt ein oder drei Sperrspalten wie nach Figur 1 beziehungsweise Figur 7 vorgesehen, kann man auch eine andere Anzahl von Sperrspalten mit zugehörigen Reinigungsspalten und Schmutztaschen vorsehen, woebei man die Durchmesserverhältnisse entsprechend wählt wie im Text zu Figur 7 angegeben.

Ansprüche:

1. Schmutzfilter für zäh fließfähige, thermoplastische Medien mit einem in einem öffenbaren Gehäuse ausgesparten Filterraum, in dem ein loser Sperrkörper formschlüssig in Filterstellung sitzt;
mit einer im Gehäuse ausgesparten Zuleitung, die mit kreisrundem Querschnitt koaxial zu einer Flußachse in den Filterraum mündet;
mit einer im Gehäuse ausgesparten Ableitung, die mit kreisrundem Querschnitt koaxial zur Flußachse auf der der Mündung der Zuleitung gegenüberliegenden Seite vom Filterraum ausgeht;
wobei der Filterraum und der Sperrkörper rotationssymmetrisch zur Flußachse und glatt ausgestaltet sind und wobei der Innendurchmesser des Filterraums, gemessen senkrecht zur Flußachse, überall größer ist als der entsprechend auf gleicher axialer Höhe gemessene Außendurchmesser des in Filterstellung befindlichen Sperrkörpers und die Differenz dieser beiden Durchmesser in Flußrichtung zunächst abnimmt bis auf einen Sperrquerschnitt eines ringförmigen Sperrspaltes und hinter diesem wieder zunimmt,
dadurch gekennzeichnet, daß der Sperrkörper ( 15 ) bei geschlossenem Gehäuse ( 1 ) aus seiner Filterstellung entlang der Flußachse ( 14 ) verschieblich ist in eine Reinigungsstellung, und
daß bei in Reinigungsstellung befindlichem Sperrkörper ein ringförmiger Reinigungsspalt ( 40 ) anstelle des Sperrspaltes ( 34 ) gebildet wird, und daß die Durchlaßbreite des Reinigungsspaltes größer ist als die die des Sperrspaltes.

2. Schmutzfilter nach Anspruch 1, dadurch gekennzeichnet, daß der Sperrkörper ( 15 ) gegen die Flußrichtung in seine Ruhestellung verstellbar ist.

3. Schmutzfilter nach Anspruch 2, dadurch gekennzeichnet, daß der Sperrkörper ( 15 ) eine in Flußrichtung gerichtete, zur Flußachse ( 14 ) koaxiale, ringförmige Anschlagfläche ( 16 ) aufweist,

daß am Gehäuse ( 1 ) eine an den Filterraum ( 33 ) angrenzende, gegen die Flußrichtung gerichtete, zur Flußachse koaxiale, ringförmige Anschlaggegenfläche ( 17 ) vorgesehen ist, und

daß in Filterstellung des Sperrkörpers der Sperrkörper mit seiner Anschlagfläche ( 16 ) an der Anschlaggegenfläche ( 17 ) des Gehäuses ( 1 ) anliegend abgestützt ist.

4. Schmutzfilter nach einem der vorhergehenden Ansprüche, dadurch gekennzeichnet, daß mindestens am einen Ende des Sperrkörpers ( 15 ) in Verlängerung desselben ein Führungskörper (26,27) befestigt ist, der formschlüssig und in Flußrichtung verschieblich in eine Führungsausnehmung (28,29) des Gehäuses ( 1 ) paßt, und

daß in dem Führungskörper und/oder in den die Führungsausnehmung umgebenden Teilen des Gehäuses auf den Umfang verteilt Kanäle ( 18-21 ) für das thermoplastische Medium ausgespart sind, deren Durchlaßbreite größer ist als die des Sperrspaltes ( 34 ).

5. Schmutzfilter nach Anspruch 4, dadurch gekennzeichnet, daß die Kanäle ( 18-21 ) gebildet sind durch Schlitze im Führungskörper (26,27), die sich entlang der Flußachse ( 14 ) erstrecken.

6. Schmutzfilter nach Anspruch 4 oder 5, dadurch gekennzeichnet, daß an beiden Enden des Sperrkörpers ( 15 ) je ein Führungskörper (26,27) befestigt ist mit einer zugehörigen Führungsausnehmung ( 28, 29 ) im Gehäuse ( 1 ).

7. Schmutzfilter nach einem der vorhergehenden Ansprüche, dadurch gekennzeichnet, daß eine sich in Flußrichtung verengende, ringförmige, zur Flußachse ( 14 ) koaxiale Konusfläche ( 43 ) außen am einen Führungskörper (26,27) vorgesehen ist, und daß eine als Stellschraube ausgebildete, von außen zugängliche Madenschraube ( 41 ) im Gehäuse ( 1 ) radial zur Flußachse ( 14 ) angeordnet ist, die bei in Filterstellung befindlichem Sperrkörper ( 15 ) auf das weite Ende der Konusfläche ( 43 ) gerichtet ist.

8. Schmutzfilter nach einem der vorhergehenden Ansprüche, dadurch gekennzeichnet, daß, bezogen auf den in Filterstellung befindlichen Sperrkörper ( 15 ), flußaufwärts des Sperrspaltes ( 34 ) eine Schmutztasche ( 38 ) gebildet ist, indem flußaufwärts des Sperrspaltes die Durchmesserdifferenz zwischen dem Außendurchmesser des Sperrkörpbers und dem Innendurchmesser des Filterraums ( 33 ) in Flußrichtung stärker abnimmt als diese Durchmesserdifferenz auf der flußabwärtigen Seite des Sperrspaltes in Flußrichtung zunimmt.

9. Schmutzfilter nach einem der vorhergehenden Ansprüche 1 bis 8, dadurch gekennzeichnet, daß der Sperrkörper ( 15 ) in seinem mittleren Bereich die Grundform zweier mit ihrer Basis aufeinanderstehender Konusse hat,
daß der Sperrkörper an seinem Umfang ( 25 ) entlang der aneinanderstoßenden Basisflächen abgerundet ist, und
daß, bezogen auf die Filterstellung des Sperrkörpers, der Sperrspalt ( 34 ) auf der Höhe der aneinanderstoßenden Basisflächen liegt.

10. Schmutzfilter nach einem der vorhergehenden Ansprüche, dadurch gekennzeichnet, daß, bezogen auf die Flußrichtung, mit Abstand hintereinander mehrere Sperrspalte ( 50 - 52 ) vorgesehen sind,
daß, bezogen auf die Flußrichtung, vor jedem Sperrspalt die Durchmesserdifferenz zwischen dem Außendurchmesser des Sperrkörpers und dem Innendurchmesser des Filterraums abnimmt und dahinter wieder zunimmt,
daß jedem Sperrspalt ein Reinigungsspalt ( 53 - 55 ) für den in Reinigungsstellung befindlichen Sperrkörper zugeordnet ist.

0172925

daß von diesen Sperrspalten in Flußrichtung der erste die größte Durchlaßbreite, der nächstfolgende eine kleinere Durchlaßbreite und so fort aufweist, und

daß die Reinigungsspalte sämtlichst größere Durchlaßbreiten aufweisen als der größte Sperrspalt.

Fig. 1

0172925

Fig.2

Fig.3

3/5

0172925

Fig.4

Fig. 5

**Fig. 6**

**Fig. 8**

50
56
53

51
54

57
52
55

58

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 010 338 (TER BEEK, GERRIT JAN) * Insgesamt * | 1,2,8 | B 29 C 45/24 |
| A | | 3,7,9 | |
| | --- | | |
| A | GB-A-1 161 379 (WHIRLPOOL CO.) * Seite 1, Zeilen 10-12; Seite 1, Zeilen 25-67; Seite 2, Zeilen 37-130; Seite 3, Zeilen 1-66; Figuren 2,3 * | 1,2,4, 7,8 | |
| | --- | | |
| A,D | DE-U-8 402 924 (ODENWÄLDER KUNSTSTOFFWERKE GmbH) * Insgesamt * | 1,7,9 | |
| | --- | | **RECHERCHIERTE SACHGEBIETE (Int. Cl.4)** |
| A | DE-A-2 422 473 (CONTINENTAL GUMMI-WERKE AG) * Insgesamt * | 1,2,7, 9,10 | B 29 C B 01 D B 29 B |
| | --- | | |
| A | GB-A-1 230 563 (BRITISH CELLOPHANE LTD.) * Insgesamt * | 1,4,5 | |
| | ----- | | |

Der vorliegende Recherchenbericht wurde für alle Patentansprüche erstellt.

| Recherchenort DEN HAAG | Abschlußdatum der Recherche 22-04-1985 | Prüfer GOURIER P.A. |
|---|---|---|